(19) Europäisches Patentamt
European Patent Office
Office européen des brevets

(11) **EP 4 682 308 A1**

(12) **EUROPEAN PATENT APPLICATION**
published in accordance with Art. 153(4) EPC

(43) Date of publication:
**21.01.2026 Bulletin 2026/04**

(21) Application number: **24774690.2**

(22) Date of filing: **06.03.2024**

(51) International Patent Classification (IPC):
**D06M 11/13** (2006.01)    **A01N 43/80** (2006.01)
**A01N 59/16** (2006.01)    **A01P 1/00** (2006.01)
**A01P 3/00** (2006.01)    **D06M 11/46** (2006.01)
**D06M 13/248** (2006.01)    **D06M 13/352** (2006.01)

(52) Cooperative Patent Classification (CPC):
**A01N 25/10; A01N 43/80; A01N 59/16; A01P 1/00;**
**A01P 3/00; D06M 11/13; D06M 11/46; D06M 11/65;**
**D06M 11/83; D06M 13/248; D06M 13/352**

(86) International application number:
**PCT/JP2024/008585**

(87) International publication number:
**WO 2024/195550 (26.09.2024 Gazette 2024/39)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **17.03.2023 JP 2023043069**

(71) Applicant: Osaka Kasei Co., Ltd.
**Osaka-shi**
**Osaka 555-0041 (JP)**

(72) Inventors:
• **HAYASHI Kazuhiro**
  **Osaka-shi, Osaka 555-0041 (JP)**
• **GOUSHI Osamu**
  **Osaka-shi, Osaka 555-0041 (JP)**
• **ASAMI Harumi**
  **Osaka-shi, Osaka 555-0041 (JP)**
• **YAMAGAMI Yasushi**
  **Osaka-shi, Osaka 555-0041 (JP)**

(74) Representative: Hoffmann Eitle
**Patent- und Rechtsanwälte PartmbB**
**Arabellastraße 30**
**81925 München (DE)**

(54) **ANTIBACTERIAL FIBER STRUCTURE AND METHOD FOR PRODUCING SAME**

(57)    As a fiber structure having antibacterial properties with no discoloration risk or texture degradation in fiber and with excellent washing durability, an antibacterial fiber structure including a synthetic fiber is provided, wherein a silver antibacterial agent (X1) and titanium oxide (X2) are immobilized to the fiber, the silver antibacterial agent (X1) is contained in an amount of 0.0001 to 0.05% by weight of the entire fiber structure, and the amount of the titanium oxide (X2) contained is set to 1 to 9 on a weight basis, where the amount of the silver antibacterial agent (X1) contained is 1.

EP 4 682 308 A1

**Description**

TECHNICAL FIELD

The present disclosure relates to an antibacterial fiber structure in which antibacterial properties are imparted to a fiber structure, and a method for producing an antibacterial fiber structure.

BACKGROUND ART

With recent increasing awareness of hygiene and health, many daily textile products, such as clothing, towels, and bedding, with antibacterial and antifungal properties have been on the market. However, antibacterial agents are often difficult to chemically bind to fibers, so most textile products with antibacterial properties are simply made by attaching the antibacterial agent to the fiber surface by coating using a binder such as resin. Therefore, products with high antibacterial properties have a larger amount of binder used, which impairs fiber texture. In addition, when the textile product is washed repeatedly, the antibacterial agent tends to leave the fiber surface together with the binder, and thus the antibacterial properties tend to deteriorate each time the textile product is washed. It is also possible to initially include the antibacterial agent in fibers at a high concentration in anticipation of decrease in antibacterial properties due to washing, but the use of a high concentration of the antibacterial agent is undesirable because of the risk of skin irritation and fiber discoloration.

On the other hand, in some synthetic fibers on the market, antibacterial agents are kneaded into fibers themselves to be spun in order to achieve washing durability. However, there are very few antibacterial agents that can withstand such kneading and spinning temperatures (in the case of polyester, 300°C or higher). In addition, inorganic antibacterial agents with high heat resistance do not bleed onto the fiber surface when enclosed in the synthetic fibers, resulting in insufficient antibacterial properties.

For example, silver antibacterial agents are known as one of excellent antibacterial agents, and it has been proposed to add such a silver antibacterial agent to a fiber substrate to impart antibacterial properties (see JP-A-2009-293147, JP-A-2000-8275 and JP-A-2005-281951).

RELATED ART DOCUMENT

PATENT DOCUMENT

PATENT DOCUMENT 1: JP-A-2009-293147
PATENT DOCUMENT 2: JP-A-2000-8275
PATENT DOCUMENT 3: JP-A-2005-281951

SUMMARY

PROBLEMS TO BE SOLVED BY THE DISCLOSURE

However, it is known that when the silver antibacterial agent is used in a textile product, there is a high risk of discoloration of the textile product. It is thus difficult to use the silver antibacterial agent in products other than dark-colored textile products.

In addition, since the silver antibacterial agent is difficult to chemically bind with fibers, it is preferable to fix the silver antibacterial agent to the fiber surface using a resin binder, according to the description of JP-A-2009-293147 (see paragraph [0018]), and the amount of silver antibacterial agent (functional agent) added in each example is as high as 10% by weight of the fiber substrate.

The textile products in which the silver antibacterial agent is fixed in a high concentration using a binder in this way have poor texture, and as described above, the silver may cause discoloration of the textile products. Thus, the antibacterial textile product obtained in JP-A-2009-293147 is limited to "industrial material use" and also limited to textile cloth with colored patterns using pre-colored yarns.

On the other hand, JP-A-2000-8275 and JP-A-2005-281951 describe methods for fixing an antibacterial agent to fiber without using a binder, but the antibacterial agent that can be used in these methods is limited to those with inorganic value/organic value of 0.3 to 1.4 or 1.4 to 3.3. This is intended to fix the antibacterial agent to fiber with the same behavior as a disperse dye by matching the inorganic value/organic value of the antibacterial agent to conditions similar to those of the disperse dye which is exhausted and dispersed into fiber.

To fix the antibacterial agent to the fiber only by thermal treatment without using a binder, it has been proposed to select an antibacterial agent using the same approach as for disperse dyes, but the antibacterial agent selected in this way has a very limited range of the ratio of inorganic value/organic value.

The present disclosure is made in view of such a circumstance and provides an antibacterial fiber structure with no risk of fiber discoloration or texture degradation and with excellent antibacterial properties with washing durability, in which the risk of discoloration is reduced by immobilizing a silver antibacterial agent and titanium oxide together, and the silver antibacterial agent can be imparted at a low concentration to the fiber by the synergistic effect of the silver antibacterial agent and the titanium oxide. The present disclosure also provides a method for producing the antibacterial fiber structure.

## MEANS FOR SOLVING THE PROBLEMS

In order to solve the problem, the present disclosure has the following aspects [1] to [11].

[1] An antibacterial fiber structure comprising:

a synthetic fiber,
wherein a silver antibacterial agent (X1) immobilized to the synthetic fiber, and
titanium oxide (X2) immobilized to the synthetic fiber,
wherein the silver antibacterial agent (X1) is contained in an amount of 0.0001 to 0.05% by weight of the entire fiber structure, and
wherein when an amount of the silver antibacterial agent (X1) contained is 1, an amount of the titanium oxide (X2) contained is set to 1 to 9 on a weight basis.

[2] The antibacterial fiber structure according to [1], wherein the antibacterial fiber structure has an antibacterial activity value of 2.2 or more in accordance with JIS L1902:2015 against both Staphylococcus aureus and Klebsiella pneumoniae after 10 times of home washing performed in accordance with JIS L0217-103.
[3] The antibacterial fiber structure according to [1] or [2], wherein a silver content in the entire fiber structure after 10 times of home washing performed in accordance with JIS L0217-103 is 0.1 to 500 ppm on a weight basis.
[4] The antibacterial fiber structure according to any one of [1] to [3], wherein the silver antibacterial agent (X1) is silver chloride.
[5] The antibacterial fiber structure according to any one of [1] to [4], containing an isothiazole antibacterial agent (X3).
[6] The antibacterial fiber structure according to [5], wherein the isothiazole antibacterial agent (X3) is 1,2-benzothiazolin-3-one.
[7] The antibacterial fiber structure according to any one of [1] to [6], wherein the antibacterial fiber structure contains no resin binder or contains a resin binder in an amount of 1% by weight or less of the entire fiber structure.
[8] A method for producing the antibacterial fiber structure according to any one of [1] to [7], the method comprising impregnating a fiber structure including a synthetic fiber with an aqueous treatment liquid containing a silver antibacterial agent (X1) and titanium oxide (X2), and performing thermal treatment at 80°C or higher and 200°C or lower under normal pressure to obtain a fiber structure in which the silver antibacterial agent (X1) and the titanium oxide (X2) are immobilized to the fiber.
[9] The method for producing the antibacterial fiber structure according to [8], wherein the aqueous treatment liquid includes an isothiazole antibacterial agent (X3).
[10] The method for producing the antibacterial fiber structure according to [9], wherein the isothiazole antibacterial agent (X3) is 1,2-benzothiazolin-3-one.
[11] The method for producing the antibacterial fiber structure according to any one of [8] to [10], wherein the aqueous treatment liquid contains no resin binder or contains a resin binder in a blended amount of 2% by weight or less of the entire fiber structure.

In the present disclosure, the expression "Y to Z" (Y and Z are each a given number) is intended to encompass "preferably more than Y" or "preferably less than Z" unless otherwise specified, in addition to the meaning of "Y or more and Z or less".

## EFFECTS OF THE DISCLOSURE

Specifically, the antibacterial fiber structure according to the present disclosure combines the silver antibacterial agent (X1) and the titanium oxide (X2) to suppress discoloration even with a concentration at which the silver antibacterial agent (X1) alone would cause discoloration of the fiber. In addition, the synergistic effect of their combination provides excellent antibacterial properties even with a very low concentration at which the silver antibacterial agent (X1) and the titanium oxide (X2) each alone could not achieve effective antibacterial properties. Thus, the antibacterial fiber structure has high quality with a low risk of fiber discoloration and texture degradation otherwise caused by the silver antibacterial agent (X1) and the titanium oxide (X2).

The synergistic effect of the silver antibacterial agent (X1) and the titanium oxide (X2) is presumably exhibited by change in electronic state due to the bonding of silver and titanium oxide and/or the composite minute structure of silver and titanium oxide (increase in effective specific surface area).

Moreover, in the present disclosure, since the silver antibacterial agent (X1) and the titanium oxide (X2) are directly immobilized to the fiber, even if a resin binder is not contained or a very small amount is contained, the antibacterial properties have excellent washing durability, and the excellent antibacterial properties are maintained even after repeated washing. Therefore, there is no stiffness of the fiber due to the resin binder.

As used herein "immobilize" does not necessarily mean that the silver antibacterial agent (X1) and the titanium oxide (X2) are completely embedded and immobilized in the fiber, but that at least part of them are immobilized in the fiber and on the fiber surface by physical or chemical factors.

With the method for producing an antibacterial fiber structure according to the present disclosure, the antibacterial fiber structure can be efficiently produced using a conventional fiber processing apparatus for dyeing or the like.

BRIEF DESCRIPTION OF DRAWINGS

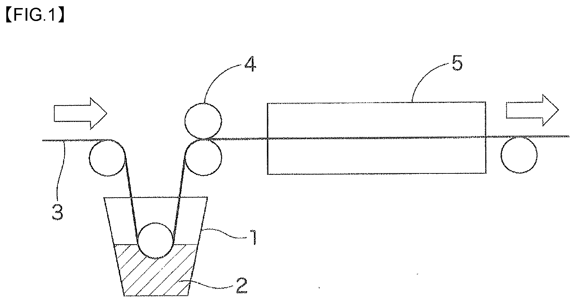

FIG. 1 is a schematic diagram illustrating a method for producing an antibacterial fiber structure according to an embodiment of the present disclosure.

EMBODIMENTS OF THE DISCLOSURE

Embodiments for carrying out the present disclosure will now be described in detail. It should be noted that the present disclosure is not limited to the following embodiments.

An antibacterial fiber structure according to the present disclosure has a silver antibacterial agent (X1) and titanium oxide (X2) immobilized at a specific ratio to a fiber, and has excellent antibacterial properties because of the synergistic effect of their combination.

<Fiber Structure>

First, examples of a fiber substrate of the fiber structure covered by the present disclosure include synthetic fibers obtained from synthetic resins such as polyester, polyamide, acrylic, and polyurethane resins, mixtures of synthetic resins with components other than synthetic resins (such as metal and inorganic substance), and composites and mixtures thereof. The fiber substrate may be natural fibers (including recycled fibers) such as cotton, hemp, rayon, wool, and silk. The fiber substrate may be blended fibers of the synthetic fibers and natural fibers described above.

Among the fiber substrates listed above, preferred are polyester fibers (including those made only of polyester fibers) made mainly of polyester resins such as polyethylene terephthalate, polytrimethylene terephthalate, polybutylene terephthalate, and polylactic acid resin, which are in particularly high demand as antibacterial processed products and are also subject to the washing durability problem, as well as mixtures of polyester fibers and other fibers (mixed fibers and blended fibers).

Exemplary forms of the fiber structure made of the above fiber substrate include yarn, string, rope, and fabric (woven, knitted, nonwoven). A textile product made by combining the fiber substrate with other materials (rubber cord and sewing thread for clothing, film, etc.) is also intended to be included in the "fiber structure" covered by the present disclosure. Examples of such a textile product include bedding (curtains, sheets, towels, comforter fabric, comforter cotton, mats, carpets, pillowcases, etc.), clothing (coats, suits, sweaters, blouses, shirts, underwear, hats, masks, socks, gloves, etc.), and uniforms (lab coats, work clothes, school uniforms, etc.).

Examples of a wide range of applications, in addition to home use, include nursing care sheets, shower curtains, car seats, seat covers, interior materials such as ceiling materials, tents, insect and bird nets, partition sheets, air conditioning filters, vacuum cleaner filters, masks, tablecloths, desk underlays, aprons, wallpaper, and wrapping paper. Other examples are medical supplies (medical beds, wheelchairs, sterile bags, sterile sheets, etc.) and hygiene products (bandages, cleaning brushes, disposable masks, etc.).

In particular, the antibacterial fiber structure according to the present disclosure has antibacterial properties with excellent washing durability and thus is suitable for application to linen supply goods (surgical gowns, lab coats, nightclothes, sheets, etc.) which are repeatedly washed and used in medical and nursing care facilities.

The antibacterial fiber structure according to the present disclosure exhibits excellent antibacterial properties with very low concentrations of the silver antibacterial agent (X1) and the titanium oxide (X2), which may cause discoloration of the fiber when used at high concentrations, and thus does not cause the fiber discoloration risk or texture degradation. The antibacterial fiber structure according to the present disclosure is therefore more effective, for example, for light-colored or white fiber structures with a lightness (L) of 60 or less, or plain fiber structures. The antibacterial fiber structure according to the present disclosure is also more effective when used for clothing products that come in contact with human skin, rather than industrial materials.

The silver antibacterial agent (X1) and the titanium oxide (X2) are used in combination as an antibacterial agent to be included in the fiber structure.

<Silver Antibacterial Agent (X1)>

Examples of the silver antibacterial agent (X1) include silver nitrate, silver chloride, silver sulfate, and silver oxide. These may be used alone or in combination of two or more. Among these, silver chloride is particularly preferred in that it has a particularly low risk of coloration compared with other silver antibacterial agents.

In these silver antibacterial agents (X1), those with little or no organic value are preferred. In particular, those with inorganic value/organic value of 5 or more is more preferred, and those with inorganic value/organic value of 7 or more are even more preferred. The specific inorganic value/organic value of the silver antibacterial agent (X1) is as follows: silver nitrate (7.3), silver chloride (10.3), silver sulfate (25.3), and silver oxide (840).

The "inorganic value" and "organic value" are the values that deal with the polarity of various organic compounds from an organic conceptual viewpoint, invented by Minoru Fujita [see "KAIHEN KAGAKU JIKKENGAKU -YUUKIKAGAKU HEN-", Kawade Shobo (1971)], and later systematically compiled by Yoshio Koda and others [see "YUUKI GAINENZU -KISO TO OYO", SANKYO SHUPPAN Co., Ltd. 1984)].

The "inorganic value" represents the property as ionic bonding, while the "organic value" represents the property as covalent bonding. In general, the higher the "inorganic value", the more hydrophilic tendency, and the higher the "organic value", the more hydrophobic tendency. These values are defined as shown in Table 1.

## Table 1

[Table 1]

| Inorganic group | Numerical value | Organic-inorganic group | Numerical value | |
|---|---|---|---|---|
| | | | Organic | Inorganic |
| Light metal (salt), | 500 or more | $R_4Bi-OH$ | 80 | 250 |
| Heavy metal (salt), Amine, and $NH_4$ salt | 400 or more | $R_4Sb-OH$ | 60 | 250 |
| | | $R_4As-OH$ | 40 | 250 |
| $-AsO_3H_2,>AsO_2H$ | 300 | $R_4P-OH$ | 20 | 250 |
| $-SO_2-NH-CO-,-N=N-NH_2$ | 260 | $-OSO_3H$ | 20 | 220 |
| $=>N'-OH,-SO_3H,-NH-SO_2-NH-$ | 250 | $>SO_2$ | 40 | 170 |
| $-CO-NH-CO-NH-CO-$ | 250 | $>SO$ | 40 | 140 |
| $->S-OH,-CO-NH-CO-NH-$ | 240 | $-CSSH$ | 100 | 80 |
| $-SO_2-NH-$ | 240 | $-SCN$ | 90 | 80 |
| $-CS-NH-*,-CO-NH-CO-*$ | 230 | $-CSOH,-COSH$ | 80 | 80 |
| $=N-OH,-NH-CO-NH-*$ | 220 | $-NCS$ | 90 | 75 |
| $=N-NH-*,-CO-NH-NH_2$ | 210 | $-Bi<$ | 80 | 70 |
| $-CO-NH-*$ | 200 | $-NO_2$ | 70 | 70 |
| $->N{\rightarrow}O$ | 170 | $-Sb<$ | 60 | 70 |
| $-COOH$ | 150 | $-As<,-CN$ | 40 | 70 |
| Lactone ring | 120 | $-P<$ | 20 | 70 |
| $-CO-O-CO-$ | 110 | $-O-[-CH_2-CH_2-O-]-CH_2-$# | 30 | 60 |
| Anthracene nucleus, Phenanthrene nucleus | 105 | $-CSS\varphi$ | 130 | 50 |
| | | $-CSO\varphi,-COS\varphi$ | 80 | 50 |
| $-OH-$ | 100 | $-NO$ | 50 | 50 |
| $>Hg$(covalent bond) | 95 | $-O-NO_2$ | 60 | 40 |
| $-NH-NH-,-O-CO-O-$ | 80 | $-NC$ | 40 | 40 |
| $-N<(-NH_2,-NH\varphi,-N\varphi_2)$aminic | 70 | $-Sb=Sb-$ | 90 | 30 |
| $>CO$ | 65 | $-As=As-$ | 60 | 30 |
| $-COO\varphi$,Naphthalene nucleus, Quinoline nucleus | 60 | $-P=P-,-NCO$ | 30 | 30 |
| $>C=NH$ | 50 | $-O-NO,-SH,-S-$ | 40 | 20 |
| $-O-O-$ | 40 | $-I$ | 80 | 10 |
| $-N=N-$ | 30 | $-Br$ | 60 | 10 |
| $-O-$ | 20 | $=S$ | 50 | 10 |
| Benzene nucleus (general aromatic monocycle) | 15 | $-Cl$ | 40 | 10 |
| Ring (general non-aromatic monocycle, any angle) | 10 | $-F$ | 5 | 5 |
| Triple bond | 3 | Iso branch* >- | -10 | 0 |
| Double bond | 2 | Tert branch# ->- | -20 | 0 |

[Note]
Carbon in inorganic group should be added to organic value.
Carbon in organic-inorganic group is considered to be already added to organic value.
* Apply to non-cyclic part
※ Apply to terminal
# Value of the square-bracketed part

When the silver antibacterial agent (X1) is used in combination with the titanium oxide (X2) described later, the risk of discoloration can be reduced until their amount reaches a higher concentration, compared with when the silver antibacterial agent (X1) alone is imparted to the fiber. In addition, the synergistic action of the two components provides excellent antibacterial properties even when their amounts are very low concentrations.

For example, when silver chloride used as the silver antibacterial agent (X1) is used alone, yellowing usually occurs with only 0.002% by weight of the entire fiber structure. However, when silver chloride is combined with the titanium oxide (X2), discoloration is suppressed even in an amount of 0.02% by weight.

When the silver antibacterial agent (X1) is used alone, effective antibacterial properties are not exhibited unless more than 0.05% by weight is contained in the entire fiber structure. However, the fiber structure with an amount exceeding 0.05% by weight of the silver antibacterial agent (X1) has a risk of fiber discoloration during thermal treatment. In contrast, when the silver antibacterial agent (X1) is used in combination with the titanium oxide (X2), excellent antibacterial properties are exhibited even when the silver antibacterial agent (X1) is in an amount of 0.05% by weight or less.

In the present disclosure, therefore, the amount of the silver antibacterial agent (X1) in the entire fiber structure is set to 0.0001 to 0.05% by weight. In this range, the combination with the titanium oxide (X2) can exhibit antibacterial properties because of a remarkable synergistic effect. In particular, 0.001 to 0.02% by weight is preferred, and 0.002 to 0.01% by weight is more preferred.

<Titanium Oxide X2)>

The titanium oxide (X2) used with the silver antibacterial agent (X1) may be prepared alone separately from the silver antibacterial agent (X1), or the titanium oxide (X2) and the silver antibacterial agent (X1) may be prepared integrally. As used herein "titanium oxide and silver antibacterial agent prepared integrally" includes, for example, titanium oxide particles as a support, on the surface of which a silver compound as the silver antibacterial agent is carried and integrated. Such a prepared product is, for example, commercially available LP10 (available from Clariant, an integrated product of 20% by weight silver chloride and 80% by weight titanium oxide).

The ratio of the titanium oxide (X2) to the silver antibacterial agent (X1) is important. When the amount of the silver antibacterial agent (X1) in the entire fiber structure is 1, the amount of the titanium oxide (X2) in the entire fiber structure is set to 1 to 9 on a weight basis. In particular, 2 to 6 is preferred, and 3.5 to 4.5 is more preferred. If the ratio of the titanium oxide (X2) is smaller than the above range, the synergistic effect with the silver antibacterial agent (X1) is insufficient. On the other hand, if the ratio of the titanium oxide (X2) is too large, the fiber texture may be degraded, which is not desirable.

In the antibacterial fiber structure according to the present disclosure, an isothiazole antibacterial agent (X3) can be additionally used in combination with the silver antibacterial agent (X1) and the titanium oxide (X2).

<Isothiazole Antibacterial Agent (X3)>

Examples of the isothiazole antibacterial agent (X3) include isothiazolin derivatives and benzoisothiazolin derivatives. Examples of the isothiazolin derivatives include 2-methyl-4-isothiazolin-3-one, 2-butyl-4-isothiazolin-3-one, 4-(n-octyl)isothiazolin-3-one, 4-methyl-5-chloroisothiazolin-3-one, 4-methylisothiazolin-3-one, and 4,5-dichloro-4-cyclohexylisothiazolin-3-one.

Examples of the benzoisothiazolin derivatives include 1,2-benzoisothiazolin-3-one, 2-butyl-1,2-benzoisothiazolin-3-one, and 4,5-benzoisothiazolin-3-one.

These isothiazole antibacterial agents (X3) can be used alone or in combination of two or more. Among these, it is preferable to use the benzoisothiazolin derivatives. In particular, it is preferable to use 1,2-benzoisothiazolin-3-one (hereinafter abbreviated as "BIT") and 2-butyl-1,2-benzoisothiazolin-3-one (hereinafter abbreviated as "BBIT"). Among these, the use of the BIT is optimal.

When used alone, the isothiazole antibacterial agent (X3) also needs to be contained in a relatively large amount in the entire fiber structure in order to obtain antibacterial properties. However, when combined with the silver antibacterial agent (X1) and the titanium oxide (X2), the isothiazole antibacterial agent (X3) provides excellent antibacterial properties in a small amount. This is preferable for reducing the risk of skin irritation and fiber discoloration, which have been problems when a high concentration is used.

In the present disclosure, when the isothiazole antibacterial agent (X3) is used, the amount of the isothiazole antibacterial agent (X3) contained in the entire fiber structure is preferably set to 0.01 to 0.2% by weight and especially preferably set to 0.015 to 0.08% by weight, for the reason as described above.

The combination with the isothiazole antibacterial agent (X3) provides more excellent synergistic effect because the mechanism of antibacterial action of the isothiazole antibacterial agent (X3) is protein synthesis system inhibition, cell membrane synthesis inhibition, thiol enzyme inhibition, and enzyme inhibition of TCA cycle, whereas the mechanism of antibacterial action of the silver antibacterial agent (X1) is protein denaturation and enzyme activity inhibition. Further, the mechanism of antibacterial action of the titanium oxide (X2) is oxidative decomposition. Therefore, combining the antibacterial agents that have mechanisms of antibacterial action completely different from each other is expected to produce a remarkable synergistic effect. In particular, even when acting on the same cell membrane, the combination of the isothiazole antibacterial agent (X3), which inhibits cell membrane synthesis, and the silver antibacterial agent (X1) and the titanium oxide (X2), which destroy the cell membrane itself, is expected to produce a more remarkable synergistic effect.

The antibacterial fiber structure according to the present disclosure can be obtained by combining the silver antibacterial agent (X1) and the titanium oxide (X2) and further combining other antibacterial agents such as the isothiazole antibacterial agent (X3) as optional components, for example, as follows.

<Method for Producing Antibacterial Fiber Structure>

(1) Preparation of antibacterial treatment liquid

First, an antibacterial treatment liquid is prepared to impart antibacterial properties to the fiber structure. This antibacterial treatment liquid can be obtained by dissolving or dispersing the silver antibacterial agent (X1) and the titanium oxide (X2) in a liquid that serves as a solvent or a dispersion medium.

Water is usually used as the liquid that serves as a solvent or a dispersion medium. Examples of the water include tap water, soft water, ion-exchanged water, pure water, and purified water. Preferably, soft water, ion-exchanged water, and purified water are suitably used. These may be used alone or may be used in combination of two or more.

An organic solvent can be used together with or instead of the water. Examples of the organic solvent include ethanol, acetone, ethyl acetate, hexane, ethanol, dichloromethane, tetrahydrofuran, diethyl ether, acetone, isopropanol, N,N-dimethylformamide, and dimethyl sulfoxide. These may be used alone or may be used in combination of two or more.

In addition to the silver antibacterial agent (X1) and the titanium oxide (X2), the antibacterial treatment liquid according to the present disclosure can be blended with known optional components such as fiber processing aid, dispersant, deodorant, antiseptic, fragrance, oil ingredient, thickener, moisturizer, pigment, pH adjuster, ceramides, sterols, antioxidant, singlet oxygen quencher, UV absorber, whitening agent, anti-inflammatory agent, other antibacterial agents (for example, the isothiazole antibacterial agent (X3), etc.), and antiviral agents as necessary in order to improve antibacterial properties and sustain the effect. These can be used alone or in combination of two or more.

The fiber processing aid is used according to the type of fiber in order to prevent abnormalities such as discoloration, hardening, and shrinkage of the fiber structure and to suppress reduction of antibacterial properties. Examples of the fiber processing aid include antistatic agent, flame retardant, softener, fixer, antifoulant, dye retarding agent, fluorescent brightener, swelling agent, penetrating agent, emulsifier, metal chelator, dye leveling agent, anti-precipitation agent, anti-migration agent, carrier, anti-dyeing agent, anti-wrinkle agent, and texturing agent.

For example, when a blend of polyester fiber and natural fiber such as cotton, rayon, wool, or silk is processed or when a blend of polyester fiber and polyamide, acrylic, or polyurethane fiber is processed, depending on processing temperature and time, the fiber other than the polyester fiber may suffer abnormalities such as discoloration, hardening, and shrinkage due to the action of cations, or the antibacterial properties may be reduced or lost.

Therefore, in order to prevent such a situation, it is preferable to use the fixer, dye leveling agent, dye retarding agent, fluorescent brightener and the like as the aid.

Examples of the fixer include alkali salt compounds typified by anhydrous sodium carbonate and neutral salt compounds typified by sodium sulfate (salt cake). Among these, alkali salt compounds are particularly preferred. Examples of other fixers include polycationic compounds, polyamine compounds, phenolic compounds, and the like, which can be used as appropriate according to dye.

Examples of the dye leveling agent and the dye retarding agent include nonionic surfactants typified by alkyl ether type, polycyclic phenyl ether type, sorbitan derivatives, aliphatic polyether type, and the like, nonionic agents typified by salt cake, ammonium sulfate, and the like, cationic surfactants typified by dodecyl triammonium salt, and anionic surfactants typified by sodium dialkyl succinate sulfonate, naphthalene sulfonate formalin condensate, and the like.

The antibacterial treatment liquid used in the present disclosure is obtained by dissolving or dispersing each of the above components in a liquid such as water or an organic solvent as described above, but the order in which the components are blended is not particularly limited. It is not necessary to mix all the components in one liquid. A first liquid containing the silver antibacterial agent (X1) and the titanium oxide (X2) and a second liquid containing the other components can be prepared, and these two liquids can be mixed to form a homogeneous solution or dispersion. Furthermore, the optional components may be blended in one liquid, or may be separated into separate liquids and finally mixed together to obtain an antibacterial treatment liquid, in consideration of the properties of optional components.

The antibacterial treatment liquid is usually not used in undiluted form, but is diluted at an appropriate ratio before being used to treat the fiber structure. The ratio of dilution of the antibacterial treatment liquid is usually adjusted based on how much each component is contained (which is called "%owf") relative to the dry fiber weight of the fiber structure to be treated.

A method for performing antibacterial treatment on the fiber structure using the antibacterial treatment liquid will now be described.

(2) Antibacterial treatment method

The antibacterial treatment using the antibacterial treatment liquid is not limited to any particular method as long as the fiber structure is brought into sufficient contact with the antibacterial treatment liquid and the antibacterial components (silver antibacterial agent (X1) + titanium oxide (X2)) in the antibacterial treatment liquid can be immobilized on the fiber surface and inside the fiber. However, in the present disclosure, it is preferable to use a normal pressure treatment method. The normal pressure treatment method will now be described briefly.

(2-1) Normal pressure treatment method

The normal pressure treatment method is a method in which the fiber structure is brought into contact with the antibacterial treatment liquid, and the fiber structure impregnated with the antibacterial treatment liquid is subjected to thermal treatment using an oven or the like. The fiber structure may be brought into contact with the antibacterial treatment liquid by a method such as spraying or coating the antibacterial treatment liquid on the fiber structure. However, in general, as schematically illustrated in FIG. 1, an antibacterial treatment liquid 2 is stored in a dipping tank 1, and a fiber structure 3 is immersed in the antibacterial treatment liquid 2 and squeezed at a predetermined squeeze rate using a mangle 4 or the like. This method is preferred because the amount of the antibacterial treatment liquid 2 applied to the fiber structure 3 is easily controlled. FIG. 1 shows a heating device 5 such as an oven. The antibacterial agent is then immobilized to the fiber structure by the thermal treatment.

The method illustrated in FIG. 1 is basically the same configuration as a method called continuous treatment method, baking method, pad-dry-cure method, or the like in the dyeing field. Antibacterial treatment can be performed by using the antibacterial treatment liquid instead of (or in some cases, together with) a dyeing treatment liquid for dyeing.

The "normal pressure treatment" means that the treatment is performed without reducing pressure or increasing pressure and usually means treatment under atmospheric pressure (1013.25 hPa).

The heating temperature (temperature in the heating space for the fiber structure) in the thermal treatment is usually 80 to 200°C, and the heating time is preferably 10 to 300 seconds. The heating temperature and the heating time are adjusted to suitable ranges as appropriate according to the type of fiber. For example, when the fiber structure is 100% polyester, the heating temperature is preferably 120 to 200°C and more preferably 150 to 180°C. The heating time is preferably 30 to 180 seconds. When the fiber structure is 100% nylon, the heating temperature is preferably 80 to 180°C.

<Antibacterial Fiber Structure>

The antibacterial fiber structure according to the present disclosure can be obtained by the treatment described above. In the antibacterial fiber structure according to the present disclosure, the fiber is impregnated with the silver antibacterial agent (X1) and the titanium oxide (X2) as the antibacterial treatment liquid, and heated in this state, so that the silver antibacterial agent (X1) and the titanium oxide (X2) are immobilized in a miniaturized state and/or ionized state in the spaces between molecules (amorphous regions loosened by heating) that constitute the fiber. Therefore, the bonding strength with the fiber is strong, and excellent washing durability is exhibited. Thus, unlike the conventional antibacterial agent attached to the fiber surface through a binder process, the antibacterial agent does not gradually drop off with the resin binder and rapidly lose its antibacterial properties.

Although it is possible to use the binder process in combination in the treatment of the present disclosure, the blended resin binder may, on the contrary, interfere with the direct bonding between the fiber and the silver antibacterial agent (X1) and the titanium oxide (X2). Thus, when a resin binder is used, the amount of the resin binder used is preferably 1% by weight or less of the entire fiber structure.

As already mentioned, the thus obtained antibacterial fiber structure according to the present disclosure has a synergistic effect of a combination of the silver antibacterial agent (X1) and the titanium oxide (X2) so that the amounts of these agents are set to be very small. Therefore, the risk of fiber discoloration and texture degradation, which are likely to occur with a large amount of antibacterial agent, is suppressed, and a textile product not only with antibacterial properties but also with excellent quality can be provided.

Since there is no need to coat the fiber surface with a resin binder as in conventional products, the fiber surface does not have rough texture due to the resin binder.

Examples of target bacteria on which the antibacterial fiber structure according to the present disclosure can exhibit antibacterial effects include gram-positive bacteria such as Staphylococcus aureus, MRSA (Methicillin-resistant taphylococcus aureus), Bacillus subtilis, and Bacillus cereus, and gram-negative bacteria such as Escherichia coli, Klebsiella pneumoniae, Salmonella typhimurium, and Pseudomonas aeruginosa.

In the present disclosure, a product is evaluated as "having antibacterial properties" when its antibacterial activity value is 2.2 or more against at least two of the above bacteria, Staphylococcus aureus and Klebsiella pneumoniae.

The "antibacterial activity value" can be measured as follows.

<Method for Measuring Antibacterial Activity Value>

Measurement is performed using "Staphylococcus aureus" and "Klebsiella pneumoniae" as test species according to the method in accordance with JIS L1902:2015. More specifically, first, each test species is inoculated into each of a standard fabric (cotton cloth that does not exhibit antibacterial activity) and an antibacterial finished textile fabric, and the viable bacteria count of each fabric is measured after incubation at 37°C for 18 to 24 hours. The antibacterial activity value is calculated from each of the measured viable bacterial counts according to the following calculation.

Antibacterial activity value A = (LogCt - LogCo) - (LogTt - LogTo)

## Standard fabric growth value F = (LogCt - LogCo)

LogCo: the common logarithm of arithmetic mean of viable bacterial counts of three samples immediately after inoculation of the standard fabric with test bacteria.
LogCt: the common logarithm of arithmetic mean of viable bacterial counts of three samples after 18 hours of incubation on the standard fabric
LogTo: the common logarithm of arithmetic mean of viable bacterial counts of three samples immediately after inoculation of the antibacterial finished textile fabric with test bacteria
LogTt: the common logarithm of arithmetic mean of viable bacterial counts of three samples after 18 hours of incubation on the antibacterial finished fabric

If the antibacterial activity value is "2.2" or more, a product is evaluated as being "effective", and if the antibacterial activity value is less than "2.2", a product is evaluated as being "ineffective" (as specified by Japan Textile Evaluation Technology Council).

Another important feature of the antibacterial fiber structure is that the antibacterial properties have washing durability. In evaluation of the antibacterial properties, the antibacterial fiber structure according to the present disclosure is subjected to "10 times of home washing at 40°C" in accordance with JIS L0217-103, and the antibacterial activity value of the fiber structure after washing is measured.

In the antibacterial fiber structure according to the present disclosure, a silver content in the entire fiber structure is preferably 0.1 to 500 ppm, more preferably 0.1 to 200 ppm, on a weight basis after "10 times of home washing at 40°C" in accordance with JIS L0217-103. When the silver content is within the above range, the synergistic effect with the titanium oxide (X2) provides particularly excellent antibacterial properties.

The silver content can be determined by ashing the target fiber structure at 800°C, dissolving the residue in hydrochloric acid, and measuring the silver concentration in the solution using an atomic absorption spectrophotometer (AA-7800, Shimadzu Corporation).

EXAMPLES

Examples of the present disclosure will now be described along with comparative examples. It should be noted that the present disclosure is not limited to the following examples.

[Preparation of Antibacterial Treatment Liquid]

First, an antibacterial treatment liquid containing each of the components shown in Tables 2 to 5 below was prepared by dissolving or suspending the silver antibacterial agent (X1) and the titanium oxide (X2), or the silver antibacterial agent (X1), the titanium oxide (X2), and the isothiazole antibacterial (X3) in water. The details of the components and the fiber structures (fabrics) to be processed are as shown below.

(1) Silver antibacterial agent (X1)

Silver nitrate
Silver chloride

(2) Titanium oxide (X2)

(3) X1 and X2: Integrated product of silver antibacterial agent and titanium oxide (JMAC LP10 available from Clariant, 2% by weight silver chloride, 8% by weight titanium oxide)

<Optional Components>

(1) Isothiazole antibacterial agent (X3)

BIT (Proxel LV available from Arxada)
BBIT (Densyl DG available from Arxada)

(2) Resin binder

Resin binder 1: Urethane binder (KT-7014 available from TAKAMATSU OIL&FAT CO., LTD.)
Resin binder 2: Melamine binder (RIKEN RESIN MM-35 available from Mikiriken Industrial Co., Ltd.)

(3) Crosslinking agent 1: Crosslinking agent (RIKEN FIXER RC-3 available from Mikiriken Industrial Co., Ltd.)

<Fiber Structure>

Fiber 1: Fabric made of polyester (100% PET Tropical available from TEIJIN LIMITED)
Fiber 2: Fabric made of polyester and cotton (50% PET, 50% cotton mixed woven, available from Shikisensha CO.,LTD.)
Fiber 3: Nylon (100% nylon, available from Shikisensha CO.,LTD.)
Fiber 4: Fabric made of polyurethane and polyester (15% polyurethane, 85% polyester mixed woven, available from Shikisensha CO.,LTD.)
Fiber 5: Fabric made of cotton (shirting, available from Shikisensha CO.,LTD.)

[Examples 1 to 24, Comparative Examples 1 to 4]

Using the antibacterial treatment liquids and the fiber structures (fabrics made of fibers 1 to 5 above) prepared in this way, antibacterial treatment was performed under the treatment conditions listed in Tables 2 to 5 below. The fabrics were removed from the container and washed with water overflowing in a washing machine for 5 minutes to remove excess components on the fiber surface, and then air-dried overnight to obtain desired antibacterial fiber structures.
The products of Examples 1 to 24 and Comparative Examples 1 to 4 were checked for changes in coloration, texture, and the like of the fibers by eye and by hand. The following evaluation was conducted, and the results are listed in Tables 2 and 5 below.

<Silver Content>

Each antibacterial fiber structure was subjected to "10 times of home washing at 40°C" in accordance with JIS L0217-103. For the fiber structure after washing, the silver content (weight basis, ppm) in the fiber structure was measured according to the method described above.

<Evaluation of Antibacterial Properties 1 and 2>

Each antibacterial fiber structure was subjected to "10 times of home washing at 40°C" in accordance with JIS L0217-103. The antibacterial properties of the fiber structures after washing were evaluated according to the method described above according to the method in accordance with JIS L1902:2015, using Staphylococcus aureus as a test species for the evaluation of antibacterial property 1 and Klebsiella pneumoniae as a test species for the evaluation of antibacterial property 2.

<Evaluation of Antifungal Properties>

Evaluation was made using "Penicillium citrinum" as a test species according to the method in accordance with JIS L1921:2015 and by measuring the amount of ATP contained in the fungus. More specifically, first, a liquid medium in which spores of the test species were suspended was inoculated into the obtained treated product and incubated at 25°C for 42 hours. The amount of ATP after incubation was measured and compared with the same test value (amount of ATP) of untreated cotton fiber to obtain an antifungal activity value. If the antifungal activity value was "2.2" or more, a product was evaluated as being "effective", and if the antifungal activity value was less than 2.2, a product was evaluated as being "ineffective" (as specified by Japan Textile Evaluation Technology Council).

[Table 2]

| | | | Comparative Example 1 | Comparative Example 2 | Comparative Example 3 | Comparative Example 4 | Example 1 | Example 2 | Example 3 |
|---|---|---|---|---|---|---|---|---|---|
| Type of fiber | | | Fiber 1 | Fiber 1 | Fiber 1 | Fiber 1 | Fiber 1 | Fiber 1 | Fiber 1 |
| Treatment conditions | Type of processing | | Baking | Baking | Baking | Baking | Baking | Baking | Baking |
| | Heating temperature(°C) | | 180 | 180 | 180 | 180 | 180 | 180 | 180 |
| | Heating time (min) | | 1 | 1 | 1 | 1 | 1 | 1 | 1 |
| Amount contained (% by weight) * | X1 | Silver chloride | 0.002 | 0.08 | - | - | (0.0001) | (0.001) | (0.002) |
| | | Silver nitrate | - | - | - | - | - | - | - |
| | X2 | Titanium oxide | - | - | 0.002 | 0.08 | (0.0004) | (0.004) | (0.008) |
| | X1·X2(LP10) | | - | - | - | - | 0.005 | 0.05 | 0.1 |
| | X3 | BIT | - | - | - | - | - | - | - |
| | | BBIT | - | - | - | - | - | - | - |
| X2/X1(Weight basis) | | | - | - | - | - | 4 | 4 | 4 |
| Evaluation result | Silver concentration after washing (ppm) | | 15 | 501 | - | - | 0.8 | 7 | 16 |
| | Change in appearance and texture of fiber | | Slightly yellow | Yellow | None | Slightly stiff texture | None | None | None |
| | Antibacterial property 1 (Staphylococcus aureus) | | Ineffective | Effective | Ineffective | Ineffective | Effective | Effective | Effective |
| | Antibacterial property 2 (Klebsiella pneumoniae) | | Ineffective | Effective | Ineffective | Ineffective | Effective | Effective | Effective |
| | Antifungal property (Penicillium citrinum) | | Ineffective | Effective | Ineffective | Ineffective | Effective | Effective | Effective |

*The amount of component contained in fiber structure (the same applies to the tables below)

Table 2

[Table 3]

| | | | Example 4 | Example 5 | Example 6 | Example 7 | Example 8 | Example 9 | Example 10 |
|---|---|---|---|---|---|---|---|---|---|
| Type of fiber | | | Fiber 1 | Fiber 1 | Fiber 1 | Fiber 1 | Fiber 1 | Fiber 1 | Fiber 1 |
| Treatment conditions | Type of processing | | Baking | Baking | Baking | Baking | Baking | Baking | Baking |
| | Heating temperature(°C) | | 180 | 180 | 180 | 180 | 180 | 180 | 180 |
| | Heating time (min) | | 1 | 1 | 1 | 1 | 1 | 1 | 1 |
| Amount contained (% by weight) * | X1 | Silver chloride | (0.004) | (0.01) | (0.02) | (0.05) | 0.004 | 0.004 | 0.004 |
| | | Silver nitrate | - | - | - | - | - | - | - |
| | X2 | Titanium oxide | (0.016) | (0.04) | (0.08) | (0.2) | 0.004 | 0.008 | 0.014 |
| | X1·X2(LP10) | | 0.2 | 0.5 | 1 | 2.5 | - | - | - |
| | X3 | BIT | - | - | - | - | - | - | - |
| | | BBIT | - | - | - | - | - | - | - |
| X2/X1(Weight basis) | | | 4 | 4 | 4 | 4 | 1 | 2 | 3.5 |
| Evaluation result | Silver concentration after washing (ppm) | | 30 | 81 | 151 | 392 | 32 | 31 | 30 |
| | Change in appearance and texture of fiber | | None | None | None | None | None | None | None |
| | Antibacterial property 1 (Staphylococcus aureus) | | Effective | Effective | Effective | Effective | Effective | Effective | Effective |
| | Antibacterial property 2 (Klebsiella pneumoniae) | | Effective | Effective | Effective | Effective | Effective | Effective | Effective |
| | Antifungal property (Penicillium citrinum) | | Effective | Effective | Effective | Effective | Effective | Effective | Effective |

EP 4 682 308 A1

Table 3

13

[Table 4]

| | | | Example 11 | Example 12 | Example 13 | Example 14 | Example 15 | Example 16 | Example 17 |
|---|---|---|---|---|---|---|---|---|---|
| Type of fiber | | | Fiber 1 | Fiber 1 | Fiber 1 | Fiber 1 | Fiber 1 | Fiber 1 | Fiber 2 |
| Treatment conditions | Type of processing | | Baking | Baking | Baking | Baking | Baking | Baking | Baking |
| | Heating temperature(°C) | | 180 | 180 | 180 | 180 | 180 | 180 | 180 |
| | Heating time (min) | | 1 | 1 | 1 | 1 | 1 | 1 | 1 |
| Amount contained (% by weight) | X1 | Silver chloride | 0.004 | 0.004 | 0.004 | - | (0.004) | (0.004) | (0.004) |
| | | Silver nitrate | - | - | - | 0.004 | - | - | - |
| | X2 | Titanium oxide | 0.018 | 0.024 | 0.032 | 0.016 | (0.016) | (0.016) | (0.016) |
| | X1·X2(LP10) | | - | - | - | - | 0.2 | 0.2 | 0.2 |
| | X3 | BIT | - | - | - | - | 0.025 | - | - |
| | | BBIT | - | - | - | - | - | 0.025 | - |
| X2/X1(Weight basis) | | | 4.5 | 6 | 8 | 4 | 4 | 4 | 4 |
| Evaluation result | Silver concentration after washing (ppm) | | 29 | 28 | 28 | 31 | 30 | 31 | 30 |
| | Change in appearance and texture of fiber | | None | None | None | None | None | None | None |
| | Antibacterial property 1 (Staphylococcus aureus) | | Effective | Effective | Effective | Effective | Effective | Effective | Effective |
| | Antibacterial property 2 (Klebsiella pneumoniae) | | Effective | Effective | Effective | Effective | Effective | Effective | Effective |
| | Antifungal property (Penicillium citrinum) | | Effective | Effective | Effective | Effective | Effective | Effective | |

14

## Table 5

[Table 5]

| | | Example 18 | Example 19 | Example 20 | Example 21 | Example 22 | Example 23 | Example 24 |
|---|---|---|---|---|---|---|---|---|
| Type of fiber | | Fiber 3 | Fiber 4 | Fiber 5 | Fiber 4 | Fiber 1 | Fiber 2 | Fiber 2 |
| Treatment conditions | Type of processing | Baking | Baking | Baking | Baking | Baking | Baking | Baking |
| | Heating temperature(°C) | 80 | 180 | 180 | 120 | 150 | 130 | 150 |
| | Heating time (min) | 1 | 1 | 1 | 1 | 1 | 1 | 1 |
| Amount contained (% by weight) | X1 Silver chloride | (0.66) | (0.004) | (0.004) | (0.004) | (0.004) | (0.004) | (0.004) |
| | Silver nitrate | - | - | - | - | - | - | - |
| | X2 Titanium oxide | (0.24) | (0.016) | (0.016) | (0.016) | (0.016) | (0.016) | (0.016) |
| | X1+X2(LP10) | 3 | 0.2 | 0.2 | 0.2 | 0.2 | 0.2 | 0.2 |
| | Resin binder 1 | - | - | - | - | - | 1 | - |
| | Resin binder 2 | - | - | - | - | - | - | 0.16 |
| | Crosslinking agent 1 | - | - | - | - | - | - | 0.16 |
| X2/X1 (Weight basis) | | 4 | 4 | 4 | 4 | 4 | 4 | 4 |
| Silver concentration after washing (ppm) | | 5 | 23 | 8 | 8 | 20 | 5 | 15 |
| Change in appearance and texture of fiber | | None | None | None | None | None | None | None |
| Evaluation result | Antibacterial property 1 (Staphylococcus aureus) | Effective | Effective | Effective | Effective | Effective | Effective | Effective |
| | Antibacterial property 2 (Klebsiella pneumoniae) | Effective | Effective | Effective | Effective | Effective | Effective | Effective |
| | Antifungal property (Penicillium citrinum) | Effective | Effective | Effective | Effective | Effective | Effective | Effective |

The above results show that the products of Examples 1 to 24 all have excellent antibacterial properties with excellent washing durability. In particular, although the silver antibacterial agent (X1) is contained at a very low concentration of 0.0001 to 0.2% by weight relative to the fiber weight, excellent antibacterial and antifungal properties are exhibited because of the synergistic effect with the titanium oxide (X2) used in combination, indicating that the antibacterial fiber structure mostly has excellent quality without degradation of fiber coloration and texture.

On the other hand, in the product of Comparative Example 1 in which only the silver antibacterial agent (X1) is used at a low concentration and the titanium oxide (X2) is not used, it is found that sufficient antibacterial and antifungal properties are not obtained. Further, it is found that the fiber is colored in the product of Comparative Example 2 treated with the silver antibacterial agent (X1) alone at a concentration that provides sufficient antibacterial and antifungal properties.

Furthermore, it is found that sufficient antibacterial and antifungal properties are not obtained in the product of Comparative Example 3 in which only the titanium oxide (X2) is used and the silver antibacterial agent (X1) is not used. It is found that in the product of Comparative Example 4 in which only the titanium oxide (X2) is used at a high concentration, antibacterial and antifungal properties are not obtained, and moreover the fiber has a stiff texture.

In the above examples, specific forms in the present disclosure have been shown. However, the above examples are merely illustrative and are not to be construed as limiting. Various modifications apparent to those skilled in the art are intended to be within the scope of the present disclosure.

INDUSTRIAL APPLICABILITY

The present disclosure is useful in providing an excellent antibacterial fiber structure that is free from degradation in fiber quality and texture, because the synergistic effect of the silver antibacterial agent (X1) and the titanium oxide (X2) provides excellent antibacterial properties with washing durability as a whole despite a relatively low content of each of the silver antibacterial agent (X1) and the titanium oxide (X2).

**Claims**

1. An antibacterial fiber structure comprising:

   a synthetic fiber,
   a silver antibacterial agent (X1) immobilized to the synthetic fiber, and
   titanium oxide (X2) immobilized to the synthetic fiber,
   wherein the silver antibacterial agent (X1) is contained in an amount of 0.0001 to 0.05% by weight of the entire fiber structure, and
   wherein when an amount of the silver antibacterial agent (X1) contained is 1, an amount of the titanium oxide (X2) contained is set to 1 to 9 on a weight basis.

2. The antibacterial fiber structure according to claim 1, wherein the antibacterial fiber structure has an antibacterial activity value of 2.2 or more in accordance with JIS L1902:2015 against both Staphylococcus aureus and Klebsiella pneumoniae after 10 times of home washing performed in accordance with JIS L0217-103.

3. The antibacterial fiber structure according to claim 1 or 2, wherein a silver content in the entire fiber structure after 10 times of home washing performed in accordance with JIS L0217-103 is 0.1 to 500 ppm on a weight basis.

4. The antibacterial fiber structure according to any one of claims 1 to 3, wherein the silver antibacterial agent (X1) is silver chloride.

5. The antibacterial fiber structure according to any one of claims 1 to 4, comprising an isothiazole antibacterial agent (X3).

6. The antibacterial fiber structure according to claim 5, wherein the isothiazole antibacterial agent (X3) is 1,2-benzothiazolin-3-one.

7. The antibacterial fiber structure according to any one of claims 1 to 6, wherein the antibacterial fiber structure comprises no resin binder or comprises a resin binder in an amount of 1% by weight or less of the entire fiber structure.

8. A method for producing the antibacterial fiber structure according to any one of claims 1 to 7, the method comprising:

   impregnating a fiber structure comprising a synthetic fiber with an aqueous treatment liquid comprising
   a silver antibacterial agent (X1) and

titanium oxide (X2); and

performing thermal treatment at 80°C or higher and 200°C or lower under normal pressure to obtain a fiber structure,

wherein the silver antibacterial agent (X1) and the titanium oxide (X2) are immobilized to the fiber.

9. The method for producing the antibacterial fiber structure according to claim 8, wherein the aqueous treatment liquid comprises an isothiazole antibacterial agent (X3).

10. The method for producing the antibacterial fiber structure according to claim 9, wherein the isothiazole antibacterial agent (X3) is 1,2-benzothiazolin-3-one.

11. The method for producing the antibacterial fiber structure according to any one of claims 8 to 10, wherein the aqueous treatment liquid comprises no resin binder or comprises a resin binder in a blended amount of 2% by weight or less of the entire fiber structure.

【FIG.1】

## INTERNATIONAL SEARCH REPORT

| International application No. |
|---|
| **PCT/JP2024/008585** |

**A.  CLASSIFICATION OF SUBJECT MATTER**

***D06M 11/13***(2006.01)i; ***A01N 43/80***(2006.01)i; ***A01N 59/16***(2006.01)i; ***A01P 1/00***(2006.01)i; ***A01P 3/00***(2006.01)i;
***D06M 11/46***(2006.01)i; ***D06M 13/248***(2006.01)i; ***D06M 13/352***(2006.01)i

FI:  D06M11/13; A01N43/80 102; A01N59/16 A; A01N59/16 Z; A01P1/00; A01P3/00; D06M11/46; D06M13/248; D06M13/352

According to International Patent Classification (IPC) or to both national classification and IPC

**B.  FIELDS SEARCHED**

Minimum documentation searched (classification system followed by classification symbols)

D06M10/00-16/00; D06M19/00-23/18; A01N1/00-65/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | JP 9-13269 A (MITSUBISHI RAYON CO., LTD.) 14 January 1997 (1997-01-14) example 1 | 1-11 |
| Y | JP 7-109674 A (CATALYSTS & CHEM IND CO., LTD.) 25 April 1995 (1995-04-25) claims, paragraphs [0010]-[0014] | 1-11 |
| Y | JP 2013-123591 A (JGC CATALYSTS & CHEMICALS LTD.) 24 June 2013 (2013-06-24) claims, paragraph [0028] | 1-11 |
| Y | JP 2017-82164 A (DAIKIN INDUSTRIES, LTD.) 18 May 2017 (2017-05-18) claims, paragraphs [0028]-[0029] | 4-6, 9, 10 |
| Y | JP 11-158017 A (MITSUBISHI PAPER MILLS LTD.) 15 June 1999 (1999-06-15) claims, paragraph [0029] | 5, 6, 9, 10 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/008585**

### C. DOCUMENTS CONSIDERED TO BE RELEVANT

| Category* | Citation of document, with indication, where appropriate, of the relevant passages | Relevant to claim No. |
|---|---|---|
| Y | JP 2009-519207 A (THOR GMBH) 14 May 2009 (2009-05-14)<br>claims | 5, 6, 9, 10 |
| A | JP 10-280270 A (TOYO BOSEKI KABUSHIKI KAISHA) 20 October 1998 (1998-10-20)<br>claims | 1-11 |
| A | WO 2022/084997 A1 (ARGAMAN TECHNOLOGIES LTD.) 28 April 2022 (2022-04-28)<br>claims | 1-11 |
| P, A | JP 2023-97388 A (TORAY INDUSTRIES, INC.) 07 July 2023 (2023-07-07)<br>claims | 1-11 |

## INTERNATIONAL SEARCH REPORT
### Information on patent family members

International application No.

**PCT/JP2024/008585**

| Patent document cited in search report | | | Publication date (day/month/year) | Patent family member(s) | | | Publication date (day/month/year) |
|---|---|---|---|---|---|---|---|
| JP | 9-13269 | A | 14 January 1997 | (Family: none) | | | |
| JP | 7-109674 | A | 25 April 1995 | (Family: none) | | | |
| JP | 2013-123591 | A | 24 June 2013 | (Family: none) | | | |
| JP | 2017-82164 | A | 18 May 2017 | (Family: none) | | | |
| JP | 11-158017 | A | 15 June 1999 | (Family: none) | | | |
| JP | 2009-519207 | A | 14 May 2009 | US | 2008/0227766 | A1 | |
| | | | | claims | | | |
| | | | | WO | 2007/026004 | A2 | |
| | | | | EP | 1924145 | A2 | |
| | | | | CA | 2621163 | A | |
| | | | | NO | 20080972 | B | |
| | | | | CN | 101252841 | A | |
| | | | | ZA | 200801849 | A | |
| | | | | AU | 2006286502 | A | |
| | | | | RU | 2008112684 | A | |
| JP | 10-280270 | A | 20 October 1998 | (Family: none) | | | |
| WO | 2022/084997 | A1 | 28 April 2022 | US | 2023/0380425 | A1 | |
| | | | | CA | 3199096 | A | |
| | | | | CN | 116685335 | A | |
| | | | | IL | 302264 | A | |
| JP | 2023-97388 | A | 07 July 2023 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009293147 A
- JP 2000008275 A
- JP 2005281951 A

**Non-patent literature cited in the description**

- **MINORU FUJITA**. KAIHEN KAGAKU JIKKENGAKU -YUUKIKAGAKU HEN. Kawade Shobo, 1971
- **YOSHIO KODA**. YUUKI GAINENZU -KISO TO OYO. SANKYO SHUPPAN Co., Ltd., 1984